# EUROPÄISCHE PATENTSCHRIFT

(11) **EP 1 421 264 B1**
(45) Veröffentlichungstag und Bekanntmachung des Hinweises auf die Patenterteilung: **14.09.2005**
(21) Anmeldenummer: 02797871.7
(22) Anmeldetag: 09.07.2002
(51) Int. Cl.: F01M 11/04, G01H 1/00, F16B 43/00

(54) **VORRICHTUNG MIT VERSCHLUSSSCHRAUBE UND BAUREIHE VON VORRICHTUNGEN**
DEVICE WITH A SCREW PLUG AND A RANGE OF DEVICES
DISPOSITIF COMPORTANT UNE VIS DE FERMETURE, ET GAMME DE FABRICATION DE DISPOSITIFS

(30) Priorität: 24.08.2001 DE 10140678
(43) Veröffentlichungstag der Anmeldung: 26.05.2004
(73) Patentinhaber: Sew-Eurodrive GmbH & Co. KG, 76646 Bruchsal (DE)
(72) Erfinder: BADER, Antonius, 76646 Bruchsal (DE); MUELLER, Matthias, 76437 Rastatt (DE); BOLZ, Heinrich, 76689 Karlsdorf-Neuthard (DE); ZIMMERMANN, Heinrich, 76646 Bruchsal (DE)
(86) Internationale Anmeldenummer: PCT/EP2002/007602
(87) Internationale Veröffentlichungsnummer: WO 2003/023200

(56) Entgegenhaltungen:
- EP-A- 0 557 688
- AT-B- 363 791
- DE-A- 10 044 474
- DE-A- 19 842 173

## Beschreibung

Die Erfindung betrifft eine Vorrichtung und eine Baureihe von Vorrichtungen.

Es sind allgemein Industrie-Getriebe bekannt, die Schmierstoff umfassen, der bei der Montage und/oder Wartung eingefüllt oder abgelassen und ausgetauscht werden muss. Daher weisen viele Getriebe eine Gewindebohrung in ihrem Gehäuse auf, die mit einer Verschlussschraube verschlossen sind. Diese ist platzsparenderweise mit einem Innensechskant versehen, so dass sie möglichst nicht oder möglichst wenig aus dem Gehäuse hervorragt.

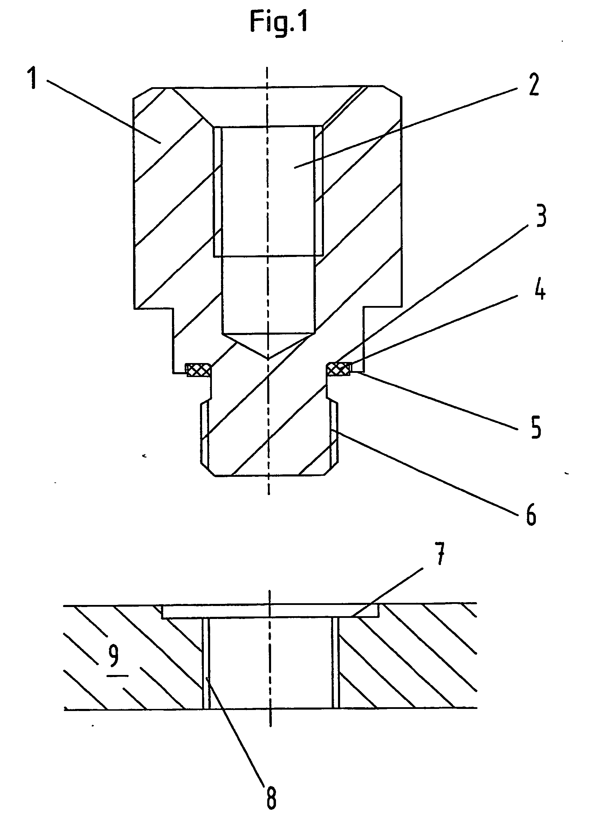

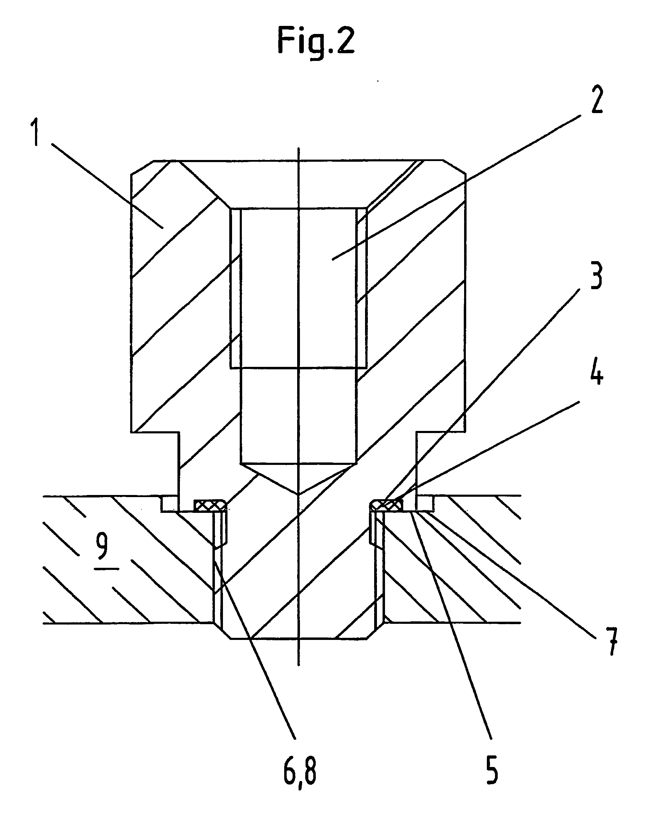

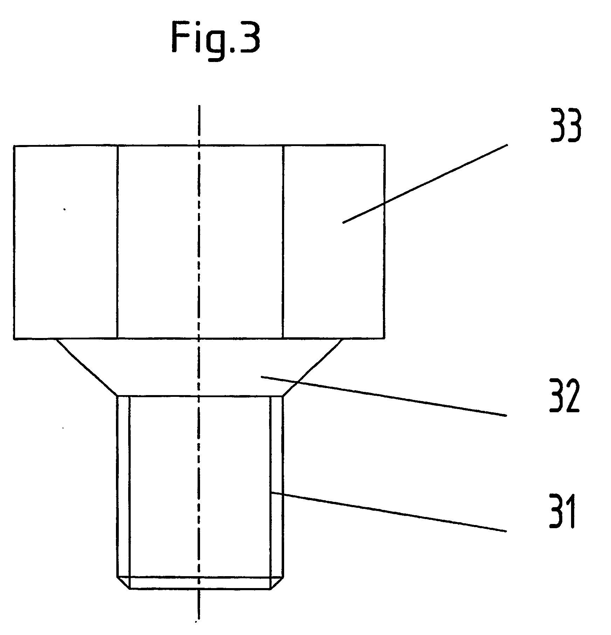

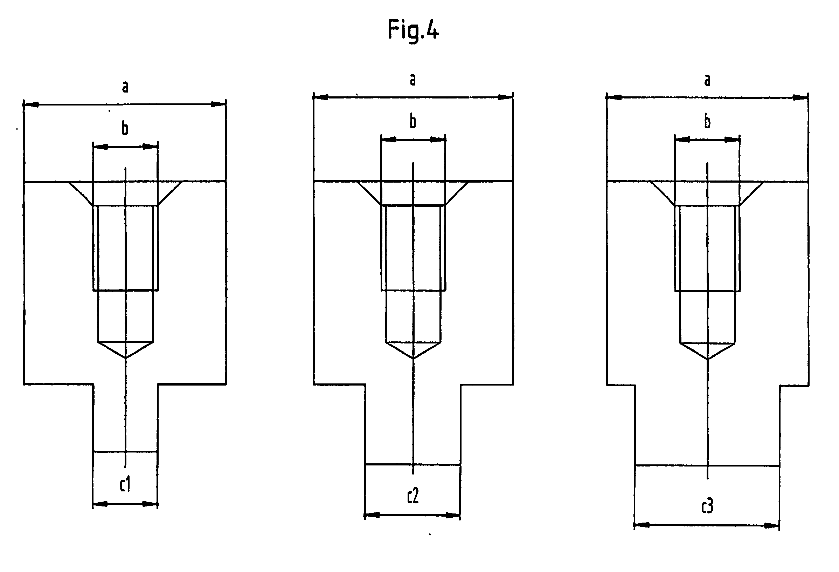

Aus der DE 198 42 173 A1 ist ein Befestigungselement mit selbstfurchender Schraubverbindung bekannt. Ein Schwingungssensor ist dabei am Befestigungselement anbringbar.
Nachteilig ist dabei, dass kein Einschrauben des Schwingungssensors ermöglicht ist, da das Befestigungselement eine vom Grundkörper ausgehende Bohrung (Figur 1 der DE 198 42 173 A1, Bezugszeichen 32) aufweist zur Verbesserung der Elastizität des Befestigungselementes (DE 198 42 173 A1, Spalte 3, Zeilen 41 - 45). Der Schwingungssensor wird also aufgeklebt oder dergleichen. Der zu detektierende Körperschall muss also durch das Schraubgewinde und den Kern (DE 198 42 173 A1, Bezugszeichen 22) und die Klebeverbindung hindurch. Somit ist nur ein einziger wesentlicher Weg für den Schall vorhanden und es ist kein gutes Signal-Rausch-Verhältnis erreichbar, da jeder Übergang beziehungsweise jede Verbindungsstelle das Signal-Rausch-Verhältnis verschlechtert. Weiter nachteilig ist, dass beim Einschrauben des Befestigungselements Späne entstehen, die Ölverschmutzung und später auch Zerstörung einer Vorrichtung auslösen. Außerdem ist die Axialführung beim Einschrauben wegen der konischen Ausführung schlecht. Somit steht das Befestigungselement in einem nicht-vorhersagbaren Winkel schräg und es kommt je nach Winkel zu verschieden guten Signal-Rausch-Verhältnissen bei den Sensorsignalen. Ebenso gibt es keine definierte Anschlagfläche und daher auch keine definierte Pressung. Infolge dessen ist auch die Dichtfunktion nicht definiert und die Signal-Rausch-Verhältnisse schwanken auch aus demselben Grunde. Eine Wiederverwendbarkeit ist ebenfalls nicht gegeben, da nach jedem Lösen und Wiedereinschrauben des Befestigungselements das Befestigungselement immer lockerer im Grundkörper sitzt. Es besteht darüber hinaus sogar die Gefahr, dass bei zu hohem Anzugsmoment der O-Ring (DE 198 42 173 A1, Bezugszeichen 4) zerstört wird und somit die Dichtfunktion nicht sicher gewährleistbar ist. Außerdem ist die Oberfläche des Grundkörpers und des Sechskantkopfes nicht bearbeitet und schon von daher eine Dichtfunktion nicht gewährleistbar.

Der Erfindung liegt die Aufgabe zugrunde, eine möglichst kompakte und kostengünstige Getriebebaureihe zu schaffen, bei der auch Getriebe mit Schwingungssensoren umfasst sind und eine hohe Flexibilität zum Erfüllen von Kundenwünschen vorhanden ist.

Erfindungsgemäß wird die Aufgabe bei der Vorrichtung gelöst nach den in Anspruch 1 angegebenen Merkmalen und bei der Baureihe von Vorrichtungen nach den in Anspruch 18 angegebenen Merkmalen gelöst.

Wesentliche Merkmale der Erfindung bei der Vorrichtung, dass die Verschlussschraube mit dem Gehäuse dicht, insbesondere gegen Ölaustritt, verbindbar ist, und dass in die Verschlussschraube eine zweite Gewindebohrung eingebracht ist, mittels derer ein Sensor lösbar verbindbar ist.
Von Vorteil ist dabei, dass somit eine kompakte und kostengünstige Baureihe von Vorrichtungen ausführbar ist, bei der auch Getriebe ohne oder mit Schwingungssensoren umfasst sind und eine hohe Flexibilität zum Erfüllen von Kundenwünschen vorhanden ist. Wenn der Kunde nur eine Vorrichtung, beispielsweise ein Getriebe oder einen Getriebemotor, ohne Schwingungssensor wünscht, wird die Vorrichtung mit einer Verschlussschraube ausgeliefert, die entweder nach Stand der Technik oder erfindungsgemäß ausgeführt ist. Wenn der Kunde jedoch eine Vorrichtung mit Schwingungssensoren wünscht, wird der Sensor in die Verschlussschraube eingeschraubt. Somit können verkaufte und ausgelieferte Vorrichtungen sogar schnell und einfach umgerüstet oder nachgerüstet werden oder für Untersuchungen vorübergehend mit den Schwingungssensoren ausgestattet werden. Wesentlicher weiterer Vorteil ist, dass keine zusätzliche Fläche des Gehäuses zum Anbringen von Sensoren bearbeitet werden muss. Somit sind Bearbeitungsvorgänge verringerbar.
Des weiteren sind als Sensor verschiedenartige Sensoren verwendbar. Besondere Vorteile bietet die Erfindung jedoch bei Schwingungssensoren, da diese derart dicht und mit hoher Anpresskraft und möglichst direkt mit der Schallquelle verbindbar sind. Insbesondere die Verwendung von Gewindebohrungen ermöglicht eine gute schalltechnische Ankoppelung. Da die Anzugsmomente der ersten und zweiten Gewindebohrung verschieden ausführbar sind, ist die schalltechnische Ankoppelung des Schwingungssensors an das Gehäuse sehr hoch wählbar mittels entsprechend hohen Anzugsmomentes. Der Sensor hingegen selbst ist mit seinem vorgeschriebenen Anzugsmoment mit der zweiten Gewindebohrung verbindbar, wird also nicht zerstört oder unzulässig belastet. Somit ist eine hohe Varianz innerhalb der Baureihe mit einer guten schalltechnischen Ankoppelung als gemeinsamer Vorteil vorhanden.

Bei einer vorteilhaften Ausgestaltung ragt die Verschlussschraube im eingeschraubten Zustand derart aus dem Gehäuse hervor mit einer derartigen hervorragenden Außenform, dass sie mit einem formschlüssig lösbar verbindbarem Werkzeug lösbar oder wieder verbindbar ist. Insbesondere ist die Außenform ein Außensechskant. Von Vorteil ist dabei, dass ein größeres Anzugsmoment als mit einem Innensechskant aufbringbar ist. Außerdem sind der Sensor und die Verschlussschraube jeweils separat verbindbar.

Bei einer vorteilhaften Ausgestaltung ist in die Verschlussschraube die zweite Gewindebohrung mit Senkung eingebracht zur lösbaren Verbindung mit einem Sensor, der ein der zweiten Gewindebohrung entsprechendes Außengewinde und einen der Senkung entsprechenden Kegelabschnitt aufweist. Von Vorteil ist dabei, dass eine schalltechnisch gute, also mit geringer Dämpfung, und mechanisch stabile Verbindung herstellbar ist. Insbesondere ist die Verschlussschraube weiter vorteilhaft aus Metall ausführbar und somit ein hohes Anzugsmoment aufbringbar, wodurch sich die Schall-Dämpfung an der zweiten Gewindebohrung mit Senkung verringert. Trotz der Ausführung der Verschlussschraube aus Metall ist weiter vorteilhaft die Verbindung von Verschlussschraube zum Gehäuse hin mittels eines Dichtrings dicht vorsehbar.

Bei einer vorteilhaften Ausgestaltung ist der Sensor ein Schwingungssensor und/oder ein Sensor zur Detektion von akustischen Schwingungen zumindest in einem Teilbereich des Frequenzbereiches von 0 Hz bis 10MHz. Von Vorteil ist dabei, dass tiefe Frequenzen, beispielsweise mit einem sogenannten Klopfsensor, mittlere und/oder hohe Frequenzen mit einem Sensor für Schall oder Körperschall, also Schwingungen bis in den hohen Ultraschallbereich hinein detektierbar sind.

Bei einer vorteilhaften Ausgestaltung umfasst die Verschlussschraube einen Anschlag zur Durchleitung akustischer Wellen und gleichzeitigen mechanischen Begrenzung fürs Einschrauben umfasst. Von Vorteil ist dabei, dass mittels des Anschlages bei Aufbringen einer entsprechend hohen Kraft ein wesentlicher Teil der Schallübertragung realisierbar ist. Insbesondere ist der Anschlag direkt auf die ihm zugeordnete, eine hohe Oberflächengüte aufweisende Dichtfläche gepresst. Somit ist auch bei mittleren oder hohen Frequenzen nur eine geringe Dämpfung vorhanden. Des Weiteren ist wegen der wohldefinierten Ausgestaltung des Anschlages und der wohldefinierten Anpresskraft der Verschlussschraube ein ebenso definiertes Signal-Rausch-Verhältnis erreichbar.

Bei einer vorteilhaften Ausgestaltung ist die Verschlussschraube mit einer Dichtfläche des Gehäuses in Kontakt, die eine derartige Oberflächengüte aufweist, dass mittels des Dichtrings eine dichte Verbindung zwischen Verschlussschraube und Gehäuse herstellbar ist. Von Vorteil ist dabei, dass die Verschlussschraube die Funktion der Schalldurchleitung und die Funktion der Dichtung gleichzeitig ausführt. Es werden also keine weiteren Bauelemente oder ein separater Aufbau, wie beispielsweise eine Gewindebohrung im Gehäuse und eine separate Verschlussschraube benötigt.

Bei einer vorteilhaften Ausgestaltung ist das Gehäuse Gehäuse eines Schmierstoff, insbesondere Öl, umfassenden Getriebes. Von Vorteil ist dabei, dass Getriebegeräusche überwachbar sind. Insbesondere sind somit Zahnbruch, Pitting und/oder Überlastungsstöße feststellbar.

Bei einer vorteilhaften Ausgestaltung weist das Gehäuse des Getriebes eine durchgehende Gewindebohrung auf zum Ablassen und/oder Einfüllen von Schmierstoff. Von Vorteil ist dabei, dass die Verschlussschraube als dichtende, lösbar verbindbare Ölablassschraube verwendbar ist und gleichzeitig als Schalldurchleitung verwendbar ist, wobei sie für den Schall sogar zwei Ausbreitungswege zur Verfügung stellt, nämlich einerseits über das Schraubgewinde und andererseits über den Anschlag.

Bei einer vorteilhaften Ausgestaltung weist die Verschlussschraube ein zylindrisches Außengewinde zum Einschrauben in die Gewindebohrung auf. Von Vorteil ist dabei, dass eine Schieflage der Verschlussschraube vermeidbar und somit eine wohldefinierte Anpresskraft, eine ebenso definierte Schallübertragung und ein dichter Abschluss am ganzen Umfang der Dichtflächen erzeugbar ist.

Bei einer vorteilhaften Ausgestaltung sind sich berührende Flächen, das Anzugsmoment des Sensors gegen die Verschlussschraube und das Anzugsmoment der Verschlussschraube gegen das Gehäuse derart ausgeführt, dass akustische Schwingungen sowohl von der ersten und zweiten Gewindebohrung als auch über den Anschlag übertragbar sind mit einem ausreichend guten Signal-Rausch-Verhältnis bei der Detektion mittels Sensor. Von Vorteil ist dabei, dass der Sensor zwar mehr als eine Verbindung, also die Verbindung seines Außengewindes und seines Kegels mit der zweiten Gewindebohrung mit Senkung, zum Gehäuse hin aufweist, nämlich den Anschlag und das Außengewinde der Verschlussschraube, aber dennoch eine sehr gute Schallübertragung, also geringe Dämpfung erzielbar ist.

Bei einer vorteilhaften Ausgestaltung sind die Verschlussschraube und das Gehäuse aus einem metallischen Werkstoff gefertigt. Von Vorteil ist dabei, dass ein viel höheres Anzugmoment als bei einer Kunststoffausführung, eine Dichtung hoher Schutzart und gleichzeitig eine gute Schallübertragung vorsehbar ist. Eine Kunststoffausführung hingegen würde zu einem viel schlechteren Signal-Rausch-Verhältnis führen.

Wesentliche Vorteile bei der Verschlussschraube sind also insbesondere, dass die Dichtung nur **bis zum vorgeschriebenen Maß komprimierbar** ist, da die Verschlussschraube nur bis zum Anschlag einschraubbar ist. Somit ist immer eine wohldefinierte gleichartige Dichtfunktion gewährleistbar und die Dichtung ist vor Zerstörung geschützt. Außerdem ist am Gehäuse eine Dichtfläche, also eine bearbeitete Fläche vorhanden, die somit ebenfalls die vorbestimmte Dichtfunktion gewährleistet. Durch die zylindrische Ausführung des Schraubgewindes der Verschlussschraube ist die Axialführung derart gut, dass die Verschlussschraube nicht schief im Gehäuse steht. Außerdem ist mittels des Anschlags eine definierte Fläche vorsehbar, die eine definierte Pressung zur Folge hat, weil die Verschlussschraube nur bis zum Anschlag einschraubbar ist. Somit ist auch ein wohldefiniertes Signal-Rausch-Verhältnis erreichbar.

Darüber hinaus ist die Verschlussschraube lösbar und wiedereinschraubbar, ohne dass eine wesentliche Lockerung oder dergleichen auftreten würde. Beim Einschrauben tritt darüber hinaus keine Spanbildung auf, die zu Verschmutzungen oder Zerstörungen führen könnte.

Nach dem Einschrauben bildet der Anschlag vorteiligerweise auch einen Schutz für den Dichtring gegen die Umgebung.

Bei einer vorteilhaften Ausgestaltung ist der Dichtring 4 derart vorgesehen, dass er während des Einschraubens zunehmend komprimierbar ist bis zu einem vom Anschlag bestimmten Maximalwert. Insbesondere ist der Dichtring 4 zwischen zwei Dichtflächen (3,7) positionierbar, deren Normalenrichtung zu der Achsrichtung des Verschlussschraubengewindes parallel ist, und beim Einschrauben der Abstand zwischen diesen Dichtflächen (3,7) bis auf einen vom Anschlag 5 bestimmten Wert verringerbar ist. Von Vorteil ist dabei, dass der Dichtring möglichst wenig belastet wird. Insbesondere wird er während des Einschraubens nur zwischen die Dichtflächen zunehmend komprimiert und wird nicht an der Bohrungsinnenwand der ersten Gewindebohrung entlang gezogen und/oder gequetscht.

Wesentliche Merkmale der Erfindung bei der Baureihe von Vorrichtungen sind, dass die Baureihe mindestens zwei Baugrößen umfasst, die unterschiedliche Verschlussschrauben umfassen,
und dass bei den mindestens zwei Baugrößen derselbe Sensor mit dieser unterschiedlichen Verschlussschraube verbindbar ist. Von Vorteil ist dabei, dass die Baureihe eine hohe Vielfalt zur Befriedigung von Kundenwünschen aufweist und gleichzeitig äußerst kostengünstig, platzsparend und schnell und einfach fertigbar ist.

Bei einer vorteilhaften Ausgestaltung ist der Sensor mit seinem Außengewinde mit der Gewindebohrung der Verschlussschraube lösbar verbindbar. Von Vorteil ist dabei, dass alle Verschlussschrauben bei verschiedenen Baugrößen mit derselben Gewindebohrung ausstattbar sind und somit der Sensor bei all diesen Baugrößen verwendbar ist.

Bei einer vorteilhaften Ausgestaltung ist bei mindestens zwei Baugrößen bei der Verschlussschraube die Gewindebohrung zum Verbinden mit dem Sensor und die Außenform, insbesondere der Außensechskant, gleichartig ausgeführt, und bei diesen Baugrößen ist das Außengewinde, der Anschlag und/oder der Dichtring verschiedenartig ausgeführt. Von Vorteil ist dabei, dass bei verschiedenen Baugrößen das gleiche Werkzeug zum Anziehen oder Lösen der. Verschlussschraube, das gleiche Werkzeug zum Anziehen oder Lösen des Sensors und trotzdem verschiedene Baugrößen der Vorrichtungen, insbesondere verschieden dicke Wandstärken des Gehäuses des Getriebes oder Getriebemotors, für denselben Sensor verwendbar sind.

Weitere vorteilhafte Ausgestaltungen ergeben sich aus den Unteransprüchen.

### Bezugszeichenliste

- 1: Verschlussschraube
- 2: zweite Gewindebohrung mit Senkung
- 3: Erste Dichtfläche
- 4: Dichtring
- 5: Anschlag
- 6: Außengewinde
- 7: Zweite Dichtfläche
- 8: erste Gewindebohrung mit Innengewinde, durchgehend
- 9: Gehäuse
- 31: Außengewinde
- 32: Kegel
- 33: Außensechskant

### Die Erfindung wird nun anhand von einer Abbildung näher erläutert:

In der Figur 1 ist in die Verschlussschraube 1 eine zweite Gewindebohrung 2 mit Senkung eingebracht zur Verbindung mit dem Sensor (31,32,33). Die Verschlussschraube 1 wird mit ihrem Außengewinde 6 in eine durch das Gehäuse durchgehende, erste Gewindebohrung 8 mit Innengewinde eingeschraubt, bis der Anschlag 5 anliegt. Nach Aufbringen eines entsprechenden Anzugmomentes wird der Schall über den Anschlag 5 und die zweite Dichtfläche 7 sehr gut übertragen. Dabei wirkt sich die eigentlich wegen der Dichtheit vorgesehene Bearbeitung der Dichtflächen, insbesondere der zweiten Dichtfläche 7 und der entsprechenden Gegenfläche des Anschlages 5, zusätzlich positiv auf die Körperschallübertragung aus, weil die schalltechnische Ankoppelung verbessert ist. Zusätzlich erfolgt auch Schallübertragung über die erste Gewindebohrung 8. Beim Aufbringen des Anzugmomentes wird außerdem der Dichtring zusammengepresst. Somit wird über die erste Dichtfläche 3 und die zweite Dichtfläche 7 die Verschlussschraube 1 mit dem Gehäuse 9 dicht, insbesondere gegen Austritt von Schmierstoff, verbunden.

Für die Ausbreitung des Schalls aus dem Getriebe zum Sensor hin stehen also zwei Wege zur Verfügung, nämlich einerseits über das Schraubgewinde und andererseits über den Anschlag. Somit ist die Schallübertragung verbessert und das Signal-Rausch-Verhältnis ebenfalls.

Am Gehäuse 9 muss also nur die zweite Dichtfläche 7 mit genügend hoher Oberflächengüte bearbeitet werden.

In der Figur 3 ist der Sensor schematisch gezeigt. Der Sensor weist ein Außengewinde 31 zum Einschrauben in die zweite Gewindebohrung 2 mit Senkung auf, wobei der Kegel 32 oder Kegelabschnitt der Senkung bei der zweiten Gewindebohrung 2 entsprechend geformt ist. Außerdem weist der Sensor einen Außensechskant 33 auf zum formschlüssigen lösbaren Verbinden mit einem Werkzeug zum Anziehen auf, wie beispielsweise Sechskant.

Figur 2 zeigt die Verschlussschraube in eingebautem Zustand. Dabei ist der Dichtring 4 gequetscht und der Anschlag 5 liegt direkt unter genügend großer Kraftwirkung auf der zweiten Dichtfläche 7 auf, die wesentlich zur Schallübertragung beiträgt.

Die Baureihe von Getrieben weist mehrere Baugrößen auf. Da die Wandstärken der zugehörigen Gehäuse verschieden sind, werden auch die Verschlussschrauben entsprechend dimensioniert. In der Figur 4 sind drei zu drei Baugrößen der Baureihe passende Verschlussschrauben gezeigt. Gehäuseseitig sind sie verschieden ausgeführt mit insbesondere den verschiedenen Durchmessern c1, c2 und c3. Sensorseitig sind sie jedoch gleich ausgeführt mit insbesondere dem selben Außenmaß a und dem selben Durchmesser der Gewindebohrung b Erstens ist dabei die Außenform als gleicher Außensechskant ausgeführt und zweitens ist auch die zweite Gewindebohrung mit Senkung jeweils gleich ausgeführt. Somit ist immer derselbe Sensor verbindbar. Die Baureihe weist also eine hohe Varianz oder Vielfalt auf, befriedigt Kundenwünsche nach Getrieben verschiedener Baugrößen mit oder ohne Sensor und benötigt sogar nur einen Sensor für verschiedene Baugrößen. Die Verschlussschraube ist sozusagen ein Adapter der die Anwendung eines Sensors für mehrere Baugrößen ermöglicht. Außerdem ist auch die Verschlussschraube ohne Sensor als abdichtendes Element verwendbar. Darüber hinaus ist es natürlich möglich die Verschlussschraube durch eine andere Verschlussschraube zu ersetzen, die keine aus dem Gehäuse hervorstehenden Teilbereiche hat und beispielsweise einen Innensechskant aufweist zum Anbringen eines Werkzeuges.

Ein wesentlicher Vorteil bei der Ausgestaltung der Verschlussschraube 1 der Figur 1 ist auch, dass der Anschlag 5 wegen seiner Funktion des Durchleitens von Schall als Mittel zur Kontrolle der Verbindung der Verschlussschraube mit dem Gehäuse verwendbar ist. Die Schallleitfähigkeit steigt nämlich während des Einschraubens der Verschlussschraube in das Gehäuse nach dem Inkontakttreten des Anschlages mit den Dichtflächen rapide an. Somit ist ein fehlerhaftes, insbesondere nicht vollständiges Einschrauben der Verschlussschraube mittels der Schalldetektion des Sensors detektierbar.

## Patentansprüche

1. Vorrichtung mit einer Befestigungsvorrichtung für einen sensor und mit mindestens einer Verschlussschraube (1) zum Einschrauben in eine erste Gewindebohrung (8) eines Gehäuses (9) oder Gehäuseteils der Vorrichtung
**dadurch gekennzeichnet, dass**
mindestens eine Verschlussschraube (1) ein Mittel zum Dichten, wie Dichtring (4), zur dichten Verbindung, insbesondere gegen Ölaustritt, mit dem Gehäuse umfasst,
und dass in die Verschlussschraube (1) eine zweite Gewindebohrung (2) eingebracht ist, mittels derer ein Sensor lösbar verbindbar ist, insbesondere einschraubbar ist,
wobei die Verschlussschraube (1) einen Anschlag (5) zur Durchleitung akustischer Wellen und gleichzeitigen mechanischen Begrenzung für das Einschrauben der Verschlussschraube (1) umfasst.

2. Vorrichtung nach mindestens einem der vorangegangenen Ansprüche,
**dadurch gekennzeichnet, dass**
der Dichtring (4) derart vorgesehen ist, dass er während des Einschraubens zunehmend komprimierbar ist bis zu einem vom Anschlag bestimmten Maximalwert.

3. Vorrichtung nach mindestens einem der vorangegangenen Ansprüche,
**dadurch gekennzeichnet, dass**
der Dichtring (4) zwischen zwei Dichtflächen (3,7) positionierbar ist, deren Normalenrichtung zu der Achsrichtung des Verschlussschraubengewindes parallel ist, und beim Einschrauben der Abstand zwischen diesen Dichtflächen (3,7) bis auf einen vom Anschlag 5 bestimmten Wert verringerbar ist.

4. Vorrichtung nach mindestens einem der vorangegangenen Ansprüche,
**dadurch gekennzeichnet, dass**
die Gewindebohrung (8) für das Einschrauben der Verschlussschraube (1) durchgehend ist, insbesondere zur Verwendung der Verschlussschraube (1) als Ölablassschraube.

5. Vorrichtung nach mindestens einem der vorangegangenen Ansprüche,
**dadurch gekennzeichnet, dass**
der Anschlag (5) auf einem größeren Durchmesser als der Dichtring (4) derart angeordnet ist, dass nach dem Einschrauben der Verschlussschraube (1) der Anschlag für den Dichtring einen gehäuseteilbildenden Schutz darstellt.

6. Vorrichtung nach mindestens einem der vorangegangenen Ansprüche,
**dadurch gekennzeichnet, dass**
die Verschlussschraube (1) im eingeschraubten Zustand derart aus dem Gehäuse (9) hervorragt mit einer derartigen hervorragenden Außenform, dass sie mit einem formschlüssig lösbar verbindbarem Werkzeug lösbar oder wieder verbindbar ist

7. Vorrichtung nach mindestens einem der vorangegangenen Ansprüche,
**dadurch gekennzeichnet, dass**
die Vorrichtung ein Getriebe oder ein Getriebemotor ist.

8. Vorrichtung nach mindestens einem der vorangegangenen Ansprüche,
**dadurch gekennzeichnet, dass**
die Außenform ein Außensechskant ist.

9. Vorrichtung nach mindestens einem der vorangegangenen Ansprüche,
**dadurch gekennzeichnet, dass**
in die Verschlussschraube (1) die zweite Gewindebohrung (2) mit Senkung eingebracht ist zur lösbaren Verbindung mit einem Sensor, der ein der zweiten Gewindebohrung
entsprechendes Außengewinde (31) und einen der Senkung entsprechenden Kegelabschnitt (32) aufweist.

10. Vorrichtung nach mindestens einem der vorangegangenen Ansprüche,
**dadurch gekennzeichnet, dass**
der Sensor ein Schwingungssensor und/oder ein Sensor zur Detektion von akustischen Schwingungen zumindest in einem Teilbereich des Frequenzbereiches von 0 Hz bis 10MHz ist.

11. Vorrichtung nach mindestens einem der vorangegangenen Ansprüche,
**dadurch gekennzeichnet, dass**
die Verschlussschraube (1) einen Dichtring (4) zur dichten Verbindung mit dem Gehäuse umfasst.

12. Vorrichtung nach mindestens einem der vorangegangenen Ansprüche,
**dadurch gekennzeichnet, dass**
die Verschlussschraube (1) einen Anschlag (5) zur Durchleitung akustischer Wellen und gleichzeitigen mechanischen Begrenzung fürs Einschrauben umfasst.

13. Vorrichtung nach mindestens einem der vorangegangenen Ansprüche,
**dadurch gekennzeichnet, dass**
die Verschlussschraube (1) mit einer Dichtfläche des Gehäuses in Kontakt ist, die eine derartige
Oberflächengüte aufweist, dass mittels des Dichtrings (4) eine dichte Verbindung zwischen Verschlussschraube (1) und Gehäuse (9) herstellbar ist.

14. Vorrichtung nach mindestens einem der vorangegangenen Ansprüche,
**dadurch gekennzeichnet, dass**
das Gehäuse (9) Gehäuse eines Schmierstoffs, insbesondere Öl, umfassenden Getriebes ist.

15. Vorrichtung nach mindestens einem der vorangegangenen Ansprüche,
**dadurch gekennzeichnet, dass**
das Gehäuse (9) des Getriebes eine durchgehende Gewindebohrung (8) aufweist zum Ablassen und/oder Einfüllen von Schmierstoff

16. Vorrichtung nach mindestens einem der vorangegangenen Ansprüche,
**dadurch gekennzeichnet, dass**
die Verschlussschraube (1) ein Außengewinde (6) zum Einschrauben in die Gewindebohrung (8) aufweist.

17. Vorrichtung nach mindestens einem der vorangegangenen Ansprüche,
**dadurch gekennzeichnet, dass**
die Verschlussschraube (1) derart ausgeführt ist, dass sie zum Verschließen einer durchgehenden Gehäuseöffnung einer mit Öl befüllbaren Vorrichtung verwendbar ist.

18. Vorrichtung nach mindestens einem der vorangegangenen Ansprüche,
**dadurch gekennzeichnet, dass**
sich berührende Flächen, das Anzugsmoment des Sensors gegen die Verschlussschraube (1) und das Anzugsmoment der Verschlussschraube (1) gegen das Gehäuse (9) derart ausgeführt sind, dass akustische Schwingungen sowohl von der ersten (8) und zweiten (2) Gewindebohrung als auch über den Anschlag (5) übertragbar sind mit einem ausreichend guten Signal-Rausch-Verhältnis bei der Detektion mittels Sensor.

19. Vorrichtung nach mindestens einem der vorangegangenen Ansprüche,
**dadurch gekennzeichnet, dass**
die Verschlussschraube (1) und das Gehäuse (9) aus einem metallischen Werkstoff gefertigt sind.

20. Baureihe von Vorrichtungen nach mindestens einem der vorangegangenen Ansprüche,
**dadurch gekennzeichnet, dass**
die Baureihe mindestens zwei Baugrößen umfasst, die unterschiedliche Verschlussschrauben (1) umfassen,
und dass bei den mindestens zwei Baugrößen derselbe Sensor mit diesen unterschiedlichen Verschlussschrauben (1) verbindbar ist,

21. Baureihe nach mindestens einem der vorangegangenen Ansprüche,
**dadurch gekennzeichnet, dass**
der Sensor mit seinem Außengewinde (31) mit der Gewindebohrung der Verschlussschraube (1) lösbar verbindbar ist.

22. Baureihe nach mindestens einem der vorangegangenen Ansprüche,
**dadurch gekennzeichnet, dass**
bei mindestens zwei Baugrößen bei der Verschlussschraube (1) die Gewindebohrung zum Verbinden mit dem Sensor und die Außenform, insbesondere der Außensechskant, gleichartig ausgeführt ist, und dass
bei diesen Baugrößen das Außengewinde, der Anschlag (5) und/oder der Dichtring (4) verschiedenartig ausgeführt ist.

## Claims

1. A device having at least one arrangement for fastening a sensor and at least once screw plug (1) for screw insertion into a first threaded bore (8) of a housing (9) or housing part of the device, **characterised in that** at least one screw plug (1) comprises sealing means, such as a sealing ring (4), for sealed contact with the housing, in particular to prevent oil leakages, and **in that** a second threaded bore (2) is present in the screw plug (1), by means of which threaded bore (2) a sensor is releasably connectable, in particular by screw insertion, the screw plug (1) comprising a stop (5) for the conduction of acoustic waves and at the same time as a mechanical limit for insertion of the screw plug (1).

2. A device according to at least one of the preceding claims, **characterised in that** the sealing ring (4) is provided in such a way that, during screw insertion, it is increasingly compressible up to a maximum value determined by the stop.

3. A device according to at least one of the preceding claims, **characterised in that** the sealing ring (4) is positionable between two sealing surfaces (3, 7) the normal direction of which is parallel to the axial direction of the screw-plug thread, and **in that**, during screw insertion, the distance between these sealing surfaces (3, 7) is reducible as far as a value determined by the stop (5).

4. A device according to at least one of the preceding claims, **characterised in that** the threaded bore (8) for insertion of the screw plug (1) is a through bore, in particular for the purpose of using the screw plug (1) as an oil drain plug.

5. A device according to at least one of the preceding claims, **characterised in that** the stop (5) is arranged on a larger diameter than the sealing ring (4) in such a way that, after the screw plug (1) has been screwed into position, the stop represents a housing part-forming protection device for the sealing ring.

6. A device according to at least one of the preceding claims, **characterised in that**, in the inserted state, the screw plug (1) projects from the housing (9) with an external form projecting in such a way as to be detachable from or reconnectable with a tool which is releasably connectable with positive fit.

7. A device according to at least one of the preceding claims, **characterised in that** the device is a set of gears or a geared motor.

8. A device according to at least one of the preceding claims, **characterised in that** the external form is an external hexagon.

9. A device according to at least one of the preceding claims, **characterised in that** the second threaded bore (2) is introduced into the screw plug (1) with a recess for detachable connection to a sensor which has an external thread (31) corresponding to the second threaded bore and a conical portion (32) corresponding to the recess.

10. A device according to at least one of the preceding claims, **characterised in that** the sensor is a vibration sensor and/or a sensor for detecting acoustic vibrations at least in part of the frequency range from 0 Hz to 10 MHz.

11. A device according to at least one of the preceding claims, **characterised in that** the screw plug (1) comprises a sealing ring (4) for sealed contact with the housing.

12. A device according to at least one of the preceding claims, **characterised in that** the screw plug (1) comprises a stop (5) for the conduction of acoustic waves and at the same time as a mechanical limit for screw insertion.

13. A device according to at least one of the preceding claims, **characterised in that** the screw plug (1) is in contact with a sealing surface of the housing, which surface has a surface quality such that a sealed contact between screw plug (1) and housing (9) is producible by means of the sealing ring (4).

14. A device according to at least one of the preceding claims, **characterised in that** the housing (9) houses a set of gears comprising a lubricant, in particular oil.

15. A device according to at least one of the preceding claims, **characterised in that** the housing (9) of the set of gears has a threaded through bore (8) for draining or introducing lubricant.

16. A device according to at least one of the preceding claims, **characterised in that** the screw plug (1) has an external thread (6) for screwing into the threaded bore (8).

17. A device according to at least one of the preceding claims, **characterised in that** the screw plug (1) is designed in such a way that it may be used for plugging a housing through-opening of a device fillable with oil.

18. A device according to at least one of the preceding claims, **characterised in that** contacting surfaces, the initial tension of the sensor relative to the screw plug (1) and the initial tension of the screw plug (1) relative to the housing (9) are designed in such a way that acoustic vibrations are transmissible both from the first (8) and the second (2) threaded bore and via the stop (5) with an adequately good signal-to-noise ratio during detection by sensor.

19. A device according to at least one of the preceding claims, **characterised in that** the screw plug (1) and the housing (9) are made of a metallic material.

20. A series of devices according to at least one of the preceding claims, **characterised in that** the series comprises at least two sizes comprising differing screw plugs (1), and **in that**, within the at least two sizes, the same sensor is connectable to these differing screw plugs (1).

21. A series according to at least one of the preceding claims, **characterised in that** the sensor is connectable, with its external thread (31), to the threaded bore of the screw plug (1).

22. A series according to at least one of the preceding claims, **characterised in that**, in the case of the screw plug (1) of at least two sizes, the threaded bore for connecting to the sensor and the external form, in particular the external hexagon, are of identical designs and **in that** the external thread, the stop (5) and/or the sealing ring (4) of the sizes are of differing designs.

## Revendications

1. Dispositif muni d'un système de fixation pour un capteur, et d'au moins une vis de fermeture (1) destinée à être vissée dans un premier trou taraudé (8) d'un carter (9) ou d'une partie de carter du dispositif,
**caractérisé par le fait**
**qu'**au moins une vis de fermeture (1) englobe un moyen d'étanchement tel qu'une bague d'étanchement (4), en vue de la liaison étanche avec le carter, interdisant notamment une sortie d'huile,
et par le fait qu'un second trou taraudé (2), au moyen duquel un capteur peut être relié amoviblement, en particulier par vissage, est pratiqué dans ladite vis de fermeture (1),
ladite vis de fermeture (1) englobant une butée (5) assurant la répercussion ou le passage d'ondes acoustiques et, simultanément, la limitation mécanique du vissage de ladite vis de fermeture (1).

2. Dispositif selon au moins l'une des revendications précédentes,
**caractérisé par le fait que**
la bague d'étanchement (4) est prévue de façon telle qu'elle puisse subir une compression croissante au cours du vissage, jusqu'à une valeur maximale déterminée par la butée.

3. Dispositif selon au moins l'une des revendications précédentes,
**caractérisé par le fait que**
la bague d'étanchement (4) peut être interposée entre deux surfaces d'étanchement (3, 7) dont la direction normale est parallèle à la direction axiale du filetage de la vis de fermeture ; et, au stade du vissage, la distance séparant ces surfaces d'étanchement (3, 7) peut être réduite jusqu'à une valeur déterminée par la butée (5).

4. Dispositif selon au moins l'une des revendications précédentes,
**caractérisé par le fait que**
le trou taraudé (8) destiné au vissage de la vis de fermeture (1) est ininterrompu, notamment en vue de l'utilisation de ladite vis de fermeture (1) en tant que vis de purge d'huile.

5. Dispositif selon au moins l'une des revendications précédentes,
**caractérisé par le fait que**
la butée (5) est disposée sur un plus grand diamètre que la bague d'étanchement (4), de façon telle que ladite butée représente pour ladite bague d'étanchement, à l'issue du vissage de la vis de fermeture (1), une protection faisant partie intégrante du carter.

6. Dispositif selon au moins l'une des revendications précédentes,
**caractérisé par le fait que**
la vis de fermeture (1) fait saillie hors du carter (9), à l'état vissé, avec un profil extérieur saillant tel qu'elle puisse être dissociée d'un outil pouvant être relié amoviblement par concordance de formes, et de nouveau reliée audit outil.

7. Dispositif selon au moins l'une des revendications précédentes,
**caractérisé par le fait que**
ledit dispositif est une transmission ou un moteur de transmission.

8. Dispositif selon au moins l'une des revendications précédentes,
**caractérisé par le fait que**
le profil extérieur est une configuration à six pans.

9. Dispositif selon au moins l'une des revendications précédentes,
**caractérisé par le fait que**
le second trou taraudé (2) à chambrage est pratiqué, dans la vis de fermeture (1), en vue de la liaison libérable avec un capteur comprenant un filetage extérieur (3 1) correspondant audit second trou taraudé, et un tronc de cône (32) correspondant audit chambrage.

10. Dispositif selon au moins l'une des revendications précédentes,
**caractérisé par le fait que**
le capteur est un capteur de vibrations et/ou un capteur de détection d'oscillations acoustiques, au moins dans une région partielle de la plage de fréquence de 0 Hz à 10 MHz.

11. Dispositif selon au moins l'une des revendications précédentes,
**caractérisé par le fait que**
la vis de fermeture (1) comprend une bague d'étanchement (4), en vue de la liaison étanche avec le carter.

12. Dispositif selon au moins l'une des revendications précédentes,
**caractérisé par le fait que**
la vis de fermeture (1) comprend une butée (5) assurant la répercussion ou le passage d'ondes acoustiques et, simultanément, une limitation mécanique du vissage.

13. Dispositif selon au moins l'une des revendications précédentes,
**caractérisé par le fait que**
la vis de fermeture (1) est en contact avec une surface d'étanchement du carter qui est dotée d'une qualité telle qu'il soit possible d'établir, au moyen de la bague d'étanchement (4), une liaison étanche entre ladite vis de fermeture (1) et ledit carter (9).

14. Dispositif selon au moins l'une des revendications précédentes,
**caractérisé par le fait que**
le carter (9) est le carter d'une transmission renfermant un lubrifiant, en particulier de l'huile.

15. Dispositif selon au moins l'une des revendications précédentes,
**caractérisé par le fait que**
le carter (9) de la transmission présente un trou taraudé ininterrompu (8), en vue de l'évacuation et/ou du déversement d'un lubrifiant.

16. Dispositif selon au moins l'une des revendications précédentes,
**caractérisé par le fait que**
la vis de fermeture (1) présente un filetage extérieur (6), en vue du vissage dans le trou taraudé (8).

17. Dispositif selon au moins l'une des revendications précédentes,
**caractérisé par le fait que**
la vis de fermeture (1) est d'une réalisation telle qu'elle puisse être utilisée pour la fermeture d'un orifice ininterrompu, pratiqué dans le carter d'un dispositif pouvant être empli d'huile.

18. Dispositif selon au moins l'une des revendications précédentes,
**caractérisé par le fait que**
des surfaces en contact, transmettant le couple de serrage du capteur vers la vis de fermeture (1) et le couple de serrage de ladite vis de fermeture (1) vers le carter (9), sont réalisées de façon telle que des oscillations acoustiques puissent être répercutées aussi bien par les premier (8) et second (2) trous taraudés, que par l'intermédiaire de la butée (5), avec un rapport signal-bruit suffisamment bon lors de la détection au moyen d'un capteur.

19. Dispositif selon au moins l'une des revendications précédentes,
**caractérisé par le fait que**
la vis de fermeture (1) et le carter (9) sont fabriqués en un matériau métallique.

20. Gamme de fabrication de dispositifs selon au moins l'une des revendications précédentes,
**caractérisée par le fait que**
ladite gamme de fabrication englobe au moins deux tailles de réalisation qui comprennent des vis de fermeture (1) différentes,
et **par le fait que**, en présence des deux tailles de réalisation prévues au minimum, le même capteur peut être relié à ces vis de fermeture (1) différentes.

21. Gamme de fabrication selon au moins l'une des revendications précédentes,
**caractérisée par le fait que**
le capteur peut être relié amoviblement, par son filetage extérieur (31), au trou taraudé de la vis de fermeture (1).

22. Gamme de fabrication selon au moins l'une des revendications précédentes,
**caractérisée par le fait que**,
en présence d'au moins deux tailles de réalisation, le trou taraudé pratiqué dans la vis de fermeture (1) pour la liaison avec le capteur, ainsi que le profil extérieur, en particulier la configuration à six pans, présentent des réalisations de mêmes types ; et **par le fait que**,
en présence de ces tailles de réalisation, le filetage extérieur, la butée (5) et/ou la bague d'étanchement (4) présentent des réalisations de types différents.
